Europäisches Patentamt

European Patent Office

Office européen des brevets

(11) Publication number: **0 267 339**
**A1**

## (12) EUROPEAN PATENT APPLICATION

(21) Application number: **86308922.3**

(22) Date of filing: **14.11.86**

(51) Int. Cl.4: **F21V 21/32**

(43) Date of publication of application:
**18.05.88 Bulletin 88/20**

(84) Designated Contracting States:
**AT BE CH DE FR GB GR IT LI LU NL SE**

(71) Applicant: **Sant-Pont, Jose Maria**
**Maria Auxiliadora 23**
**E-08017 Barcelona(ES)**

Applicant: **Bigas-Balcells, Ramon**
**Plaza Gironella 1**
**E-08017 Barcelona(ES)**

(72) Inventor: **Sant-Pont, Jose Maria**
**Maria Auxiliadora 23**
**E-08017 Barcelona(ES)**
Inventor: **Bigas-Balcells, Ramon**
**Plaza Gironella 1**
**E-08017 Barcelona(ES)**

(74) Representative: **Alexander, Thomas Bruce et al**
**Boult, Wade & Tennant 27 Furnival Street**
**London EC4A 1PQ(GB)**

(54) **A plastically bendable elongate supporting member.**

(57) A plastically bendable elongate supporting member (1) comprises a plurality of elongate contiguous elements (2, 5, 6, 7) encased in a sheath (3) exerting a compressive force yet allowing relative sliding movement of the elements.

The member may be used for a bendable table lamp.

FIG. 1

## A PLASTICALLY BENDABLE ELONGATE SUPPORTING MEMBER

This invention concerns a plastically bendabley elongate supporting member for use, for example, in a table or desk lamp, one end being fixed to a base, the other supporting the lightbulb.

A plastically bendable elongate supporting member is characterised in that it comprises a plurality of elongate contiguous elements encased in a sheath exerting a compressive force yet allowing relative sliding movement of the elements.

Such a member or articulatable support can have the following characteristics:

-It supports the moment of resulting force corresponding to any position.

-Starting at the moment given by the aforementioned condition through a small increase of the bending moment it becomes plastically deformed and an excellent precision is obtained in the position in which it is left.

-It resists at least 10,000 bending cycles through 180°, without losing its functional character, which means a possible minimum of 10 years perfect operation.

-It maintains its static and dynamic properties with normal atmospherical variation.

-Among many other possibilities of application for this supporting bar, one of the most appropriate might be a supporting arm for an articulate table lamp.

The supporting bar concerned is characterised by the fact that it comprises many thin and flat contiguous strips and they are juxtaposed longitudinally in very close contact, staying together parallelly like a package forming the bar with an external cover which provides a centripetal pressure uniformly distributed over the whole bar, all this in a way that in the rest position the whole assembly acts as a compact bar due to frictional forces existing between the strips, so that when submitted to a bending force applying a pair of forces in a manner that said frictional forces grow stronger between the contiguous strips, said strips by means of a sliding movement between each other permit the bending of the bar, the mentioned centripetal pressure to the cover is of such magnitude, that when ceasing this bending effort, frictional forces among the strips are stronger than the elastic pair of recovery produced by the proper elasticity of the material which the strips are made of, by means of which the bar remains deformed following a plastic performance.

Two embodiments of the invention will now be described by way of example, and with reference to the accompanying drawings, of which:

Figure 1 shows a perspective view of a part of a supporting bar;

Figures 2 and 3 are both side views, to a smaller scale, of the bar of Figure 1 with all the elements at one common end fixed with respect to one another; and

Figure 4 shows a similar view to that of Figure 1 of a second supporting bar.

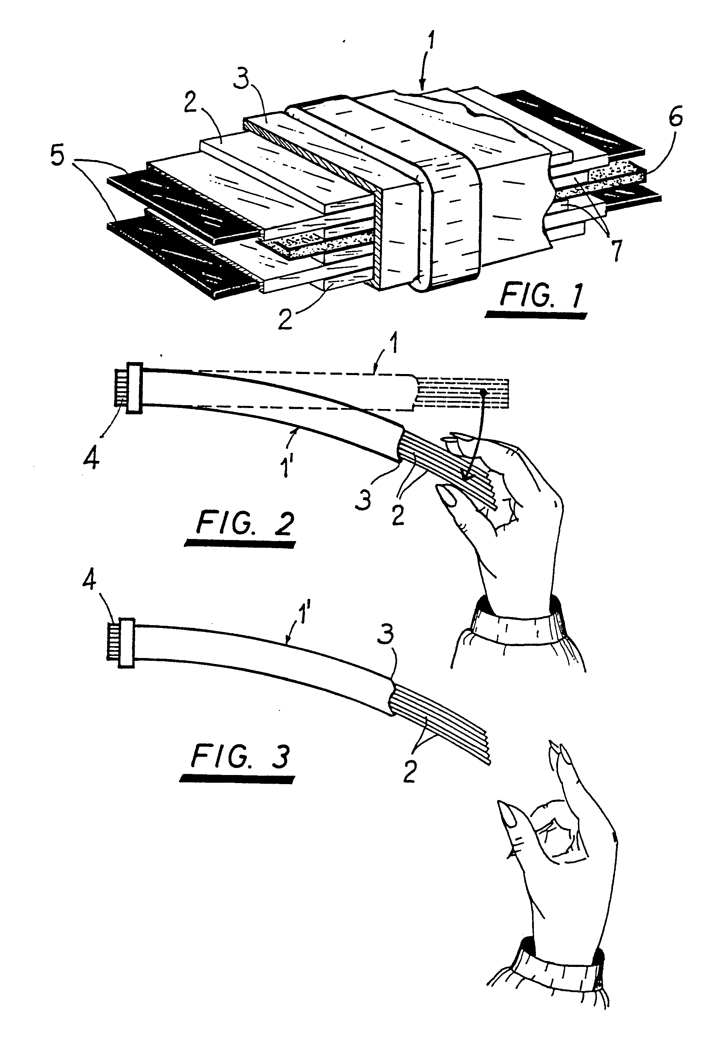

Figure 1, 2 and 3 show a plastically bendable elongate supporting member or bar 1 which includes many thin and flat contiguous strips 2 with a similar or equal section, juxtaposed longitudinally in very close contact and staying together in parallel package forming the bar by an external cover or sheath 3 which exerts a compressive force distributed in an uniform manner over the whole bar 1.

Even though in Figure 1 all the strips 2 have substantially the same section, it would be possible to make a bar 1 with strips 2 of substantially different sections. It is also evident that the shape with rectangular section of the bar 1 is definitely not the only one which can be obtained by the supporting bar.

In the rest portion, the whole assembly acts like a compact bar 1, due to the frictional forces existing betwen the strips 2. But when bar 1 is submitted to a bending effort, as indicated by an arrow in Figure 2, applying a pair of forces represented here by the end 4 which is inmobile and by the hand of the user which acts at the other end of bar 1, so that said frictional forces grow among the contiguous strips 2, the strips 2, by a sliding movement between each other permit the bending of bar 1 to position 1′ for instance, being said pressure centipetal to the cover 3 of such magnitude that, when ceasing this bending effort (Figure 3), the frictional force among the strips 2 is greater than the elastic pair of recovery produced by the proper elasticity of the material from which the strips 2 are made. Under these circumstances, bar 1 remains deformed following a plastic performance.

All strips 2 constituting bar 1 can be joined advantageously and inseparably by one of its ends 4 (Figure 2 and 3).

Apart from this, at least two strips 5 which are a part of bar 1, can be constituted advantageously by an electrically conductive material.

If friction among the strips should be increased, an intermediate strip 6 which is permanently magnetised can be placed between respective iron strips 7.

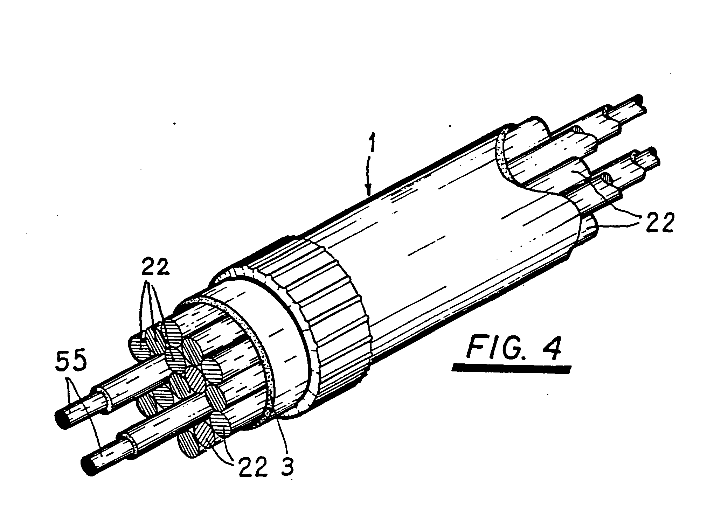

Figure 4 shows another elongate member or bar 1, which includes many thin contiguous rods 22, with a similar or equal section, from which at least two bars 55 can be constituted by an electrically conductive material. The same as in the realisation of Figures 1, 2 and 3, the bars 22 and 55 are packed with a sheath or cover 3 which provides a compressive force uniformly distributed over the whole bar 1.

## Claims

1. A plastically bendable elongate supporting member (1) characterised in that it comprises a plurality of elongate contiguous elements (2, 5, 6, 7, 22, 55) encased in a sheath (3) exerting a compressive force yet allowing relative sliding movement of the elements.

2. A member (1) as claimed in Claim 1, characterised in that at one comon end (4) all the elements are fixed with respect to one another.

3. A member (1) as claimed in either preceding claim, characterised in that at least one of the elements (5, 55) is electrically conductive.

4. A member (1) as claimed in any preceding claim, characterised in that at least one of the elements (6) is a permanent magnet.

5. A member (1) as claimed in Claim 4, characterised in that at least one element (7) adjacent to the permanent magnet (6) is of iron.

6. A member (1) as claimed in any preceding claim, characterised in that the elements (2, 5, 6, 7) are rectangular in cross-section.

7. A member (1) as claimed in any one of Claims 1 to 5, characterised in that the elements (22, 55) are circular in cross-section.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-C- 114 474 (ARNOLD FLEXIBLE BRACKET)<br>* Whole document * | 1-3,7 | F 21 V 21/32 |
| | --- | | |
| A | US-A-3 681 590 (DICKIE)<br>* Figures 1-8 * | 3,5 | |
| | ----- | | |

**TECHNICAL FIELDS SEARCHED (Int Cl 4)**

F 21 V
F 16 M

The present search report has been drawn up for all claims

| Place of search | Date of completion of the search | Examiner |
|---|---|---|
| THE HAGUE | 18-06-1987 | FOUCRAY R.B.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82